Europäisches Patentamt

European Patent Office

Office européen des brevets

(11) Veröffentlichungsnummer: **0 259 640 B1**

## EUROPÄISCHE PATENTSCHRIFT

(45) Veröffentlichungstag der Patentschrift: **10.04.91**

(51) Int. Cl.⁵: **F25C 1/16**, C02F 1/22

(21) Anmeldenummer: **87111665.3**

(22) Anmeldetag: **12.08.87**

(54) **Gefrierverdampfung.**

(30) Priorität: 27.08.86 CH 3446/86

(43) Veröffentlichungstag der Anmeldung:
16.03.88 Patentblatt 88/11

(45) Bekanntmachung des Hinweises auf die
Patenterteilung:
10.04.91 Patentblatt 91/15

(84) Benannte Vertragsstaaten:
**AT BE DE FR GB IT NL SE**

(56) Entgegenhaltungen:
EP-A- 0 051 340     EP-A- 0 078 164
EP-A- 0 242 426     WO-A-85/02458
DE-A- 3 213 415     DE-A- 3 424 549
DE-C- 276 011       DE-C- 561 906
DE-C- 917 491       FR-A- 1 366 063
FR-A- 1 507 738     FR-A- 2 491 607
GB-A- 371 212       US-A- 3 443 393
US-A- 3 488 974     US-A- 3 817 051

(73) Patentinhaber: **GEBRÜDER SULZER AKTIENGE-SELLSCHAFT**
**Zürcherstrasse 9**
**CH-8401 Winterthur(CH)**

(72) Erfinder: **Ehrsam, Christian, Dr.**
**Obermühlestrasse 2**
**CH-8400 Winterthur(CH)**

## Beschreibung

### Gefrierverdampfung

Die Erfindung betrifft ein Verfahren zur Erzeugung einer Eiskristallsuspension mittels Gefrierverdampfung nach dem ersten Teil des Anspruchs 1 und eine Vorrichtung zur Durchführung des Verfahrens, nach dem ersten Teil des Anspruchs 4.

Die Bildung von Eis mittels Gefrierverdampfung beruht auf einem Prozess, der beim Tripelpunkt des Wassers stattfindet. Es ist eine Voraussetzung für diesen Prozess, dass der Dampfdruck unter den Sättigungsdruck am Tripelpunkt gesenkt wird.

Die treibende Kraft für den Transport des bei der Eisbildung freiwerdenden Dampfes lässt sich auf verschiedene Arten erzeugen. So kann der Dampf beispielsweise mittels eines Verdichters - eines mechanischen Verdichters oder eines Dampfstrahlverdichters - abgesaugt und der verdichtete Dampf in einem Kondensator verflüssigt werden. Eine andere Möglichkeit besteht darin, dass der unverdichtete Wasserdampf auf Oberflächen niedergeschlagen wird, welche auf Temperaturen abgekühlt werden, die unterhalb der Gleichgewichtstemperatur am Tripelpunkt liegen. Bei diesem Vorgehen findet eine Desublimation statt, d.h. der niedergeschlagene Wasserdampf tritt in Form von Eis auf.

Aus der US-PS 4 474 031 ist beispielsweise eine Wärmepumpenanlage bekannt, in welcher in einem Vakuumtank Eis durch Desublimation von unverdichtetem Wasserdampf erzeugt wird. Ein wesentlicher Nachteil des bekannten Verfahrens besteht darin, dass periodisch das bei der Desublimation gebildete Eis abgetaut werden muss.

Aus der US-PS 4 003 213 ist ein gattungsmäßes Verfahren zur durch Gefrierverdampfung am Tripelpunkt bekannt, wobei der entstehende Dampf verdichtet und bei einer Temperatur oberhalb des Tripelpunktes durch Wärmeaustausch z.B. mit Umgebungsluft kondensiert werden soll.

Ein ähnliches Verfahren ist aus dem Buch "Principles of Desalination" von K.S. Spiegler, ed. New York, 1966 (Academic Press) / Kapitel 7 "Freezing Methods" von A.E. Snyder, bekannt.

Bei dem bekannten Verfahren zur Meerwasserentsalzung wird ein Vorkühler verwendet, in welchem Eiskristallkeime gebildet werden sollen, die im weiteren Prozess zur Erzeugung von Eiskristallen durch Kristallwachstum dienen. Die Kondensation des entstehenden und anschliessend verdichteten Dampfes erfolgt ebenfalls bei einer oberhalb des Tripelpunktes liegenden Temperatur von ungefähr 3° C, bei der keine Probleme durch Eisbildung auf der Oberfläche des Kondensators entstehen.

Wesentliche Nachteile der beiden zuletzt genannten Verfahren bestehen darin, dass aufwendige Kompressoren infolge grosser Volumenströme und infolge relativ grosser Verdichtungsverhältnisse (> 1.3) erforderlich sind.

Der Erfindung liegt die Aufgabe zugrunde, eine Eiskristallsuspension mittels Gefrierverdampfung zu erzeugen, bei der keine Eisbildung durch Desublimation erfolgt und die mit Hilfe von möglichst kleinen Verdichtungsverhältnissen durchgeführt werden kann. Dieses ist besonders dann wesentlich, wenn grosse Volumenströme vorhanden sind, wie sie beispielsweise zur Klimatisierung von Bergwerken erforderlich sind. Kleine Verdichtungsverhältnisse erlauben dann, die Dampfkompression mit einfacheren Mitteln durchzuführen, die bei grösseren Verdichtungsverhältnissen wegen schlechten Wirkungsgrades unvorteilhaft wären.

Es ist ein weiteres Ziel der Erfindung, die Wirtschaftlichkeit des Verfahrens dahingehend zu verbessern, dass die Kontinuität gewahrt bleibt, d.h. nicht durch Abtauvorgänge unterbrochen wird.

Diese Aufgabe wird mit Hilfe der im Kennzeichen des Anspruchs 1 angegebenen Merkmale gelöst. Vorteilhafte Ausführungsformen bzw. Weiterbildungen des erfindungsgemässen Verfahrens ergeben sich aus dem Kennzeichen der Ansprüche 2 und 3. Vorrichtungen bzw. Anlagen zur Ausführung des erfindungsgemässen Verfahrens werden in den Kennzeichen der Ansprüche 4 bis 15 angegeben.

Die Erfindung wird im folgenden anhand von in der Zeichnung dargestellten Ausführungsbeispielen erläutert.

Fig. 1a zeigt in schematischer Darstellung einen Schnitt durch einen Apparat zur Herstellung einer Eiskristallsuspension.

In Fig. 1b ist ein Detail des Apparates perspektivisch dargestellt.

Die Fig. 2 zeigt in einem Schema einen Apparat gemäss Fig. 1a im Zusammenhang mit einem zugehörigen Dampf/Wasser/Eis-Kreislauf (Produktkreislauf).

In Fig. 3 ist ein Detail des Kondensatorverdampfers aus Fig. 1a und

in Fig. 4 ein Schabwärmetauscher einer Anlage gemäss Fig. 2 dargestellt.

Fig. 5 zeigt in schematischer Darstellungsweise einen Schnitt durch eine gegenüber der Fig. 1a abgewandelte Ausführungsform eines Apparates zur Herstellung einer Eiskristallsuspension.

Fig. 6 zeigt Diagramme für eine spezielle Betriebsweise des in Fig. 5 dargestellten Apparates.

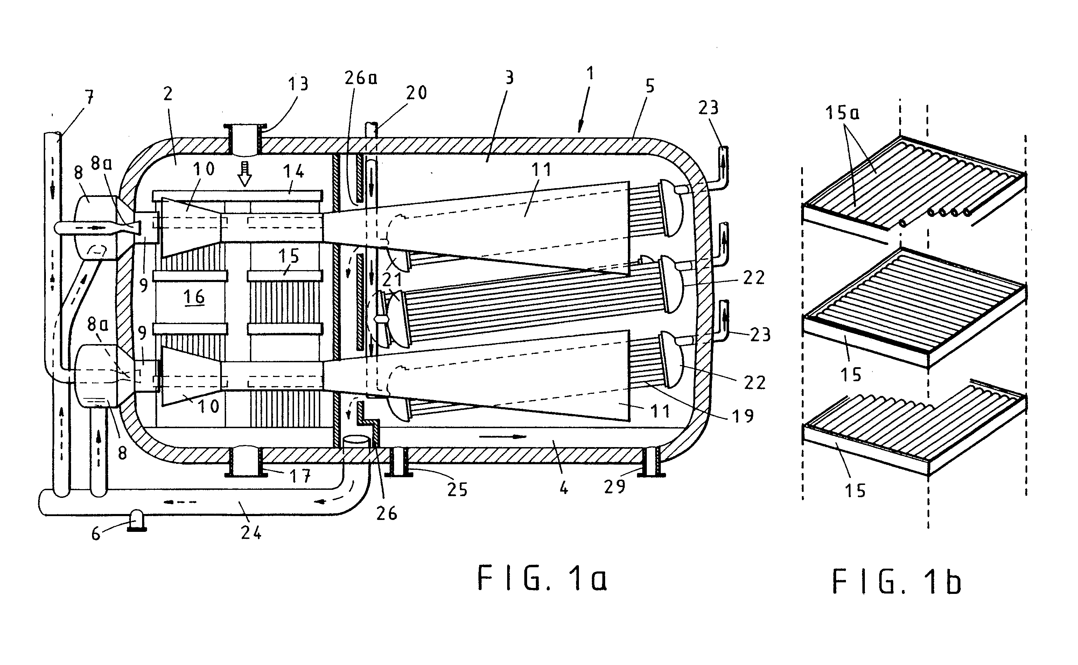

Der in Fig. 1a dargestellte Eiserzeugungsapparat 1, im folgenden mit Eiserzeuger bezeichnet, weist einen Gefrierverdampfungsraum 2, einen Kondensationsraum 3 und einen Bodenraum 4 auf.

Der Eiserzeuger 1, der unter Vakuum steht, ist von einem druckfesten Mantel 5 umschlossen. Der Anschluss an eine nicht dargestellte Vakuumpumpe erfolgt über eine Absaugleitung 6.

Eine Treibdampf-Leitung 7 mündet in die Düsenkammern 8 von zwei Dampfstrahlverdichtern im Eiserzeuger 1. An die Düsenkammern 8 ist jeweils ein erster Mischraum 9 und an letzteren jeweils ein zweiter Mischraum 10 angeschlossen. Die Diffusoren sind mit der Bezugsziffer 11 bezeichnet. Es ist auch möglich, nur einen Dampfstrahlverdichter oder mehr als zwei einzusetzen.

Im Raum 2 ist ein Eintrittsstutzen 13 für rezirkulierte Eiskristallsuspension und ein Verteiler 14 angeordnet. Für die Führung der Eiskristallsuspension sind beispielsweise aus Kunststoffrohren 15a bestehende Roste 15 unterhalb des Verteilers 14 angeordnet (s. Fig. 1b).

Die während des Betriebes über die Roste 15 freifallende Eiskristallsuspension in Form von Schichten ist mit der Bezugsziffer 16 bezeichnet.

An den unteren Teil des Raumes 2 ist ein Austrittsstutzen 17 für die Eiskristallsuspension angeschlossen.

Im Raum 3 ist ein Rohre 19 aufweisender gefluteter Kondensator-Verdampfer angeordnet. Die Rohre 19 sind in Rohrbündeln mit Kältemittelverteilern 21 und Sammlern 22 zusammengefasst. Die Rohre 19 sind in Strömungsrichtung leicht steigend angeordnet, um die Auftriebskräfte der Dampfblasen zur Unterstützung der Kältemittelströmung nutzen zu können.

An den Raum 3 ist ein Eintrittsstutzen 20 sowie Austrittsstutzen 23 für Kältemittel angeschlossen.

Die Räume 2 und 3 sind durch eine Trennwand 26 unterteilt. Die Trennwand ist hohl ausgebildet und mit Oeffnungen 26a versehen.

An die Trennwand 26 ist eine Rückführleitung 24 für Wasserdampf angeschlossen, der mit einem Zusatzstoff, z.B. Aethanol, angereichert ist.

In den Bodenraum 4 des Eiserzeugers mündet ein Stutzen 25 für Zufuhr von primärer Eissuspension. Im Bodenraum 4 ist weiterhin eine Auslaufstelle 29 für Eissuspension und Kondensat angeordnet.

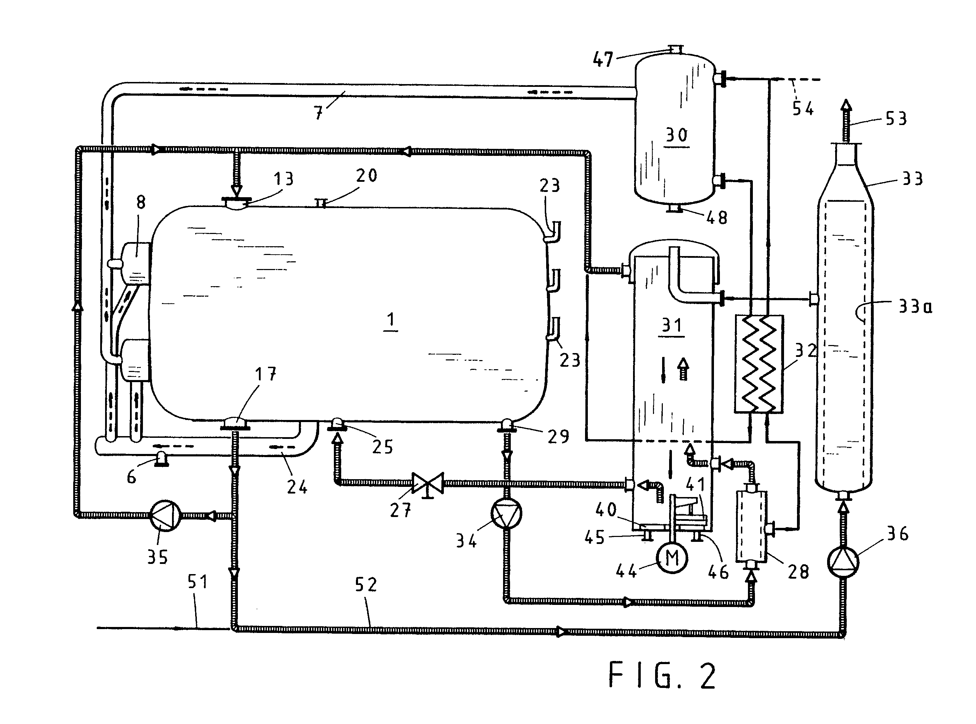

Im folgenden wird anhand der Fig. 2 der Produktkreislauf beschrieben. Auf die Darstellung des zugehörigen Kältemittelkreislaufes wird verzichtet, d.h. es sind nur die Anschlussstutzen für Kältemittel an den entsprechenden Stellen im Produktkreislauf gezeigt.

Wie aus Fig. 2 hervorgeht, weist der Produktkreislauf einen Dampferzeuger 30, einen Gegenstromwäscher 31 für primäres Eis, einen Gegenstrom-Wärmeaustauscher 32 und eine Entwässerungseinheit 33 mit einem rohrförmigen Sieb 33a auf. Weiterhin ist im Produktkreislauf eine Pumpe 34 für die primäre Eissuspension, eine Umwälzpumpe 35 für die sekundäre Eissuspension sowie eine Produktpumpe 36 vorgesehen. In der Leitung zwischen dem Anschlussstutzen 25 und dem Gegenstromwäscher 31 ist ein Ventil 27 angeordnet.

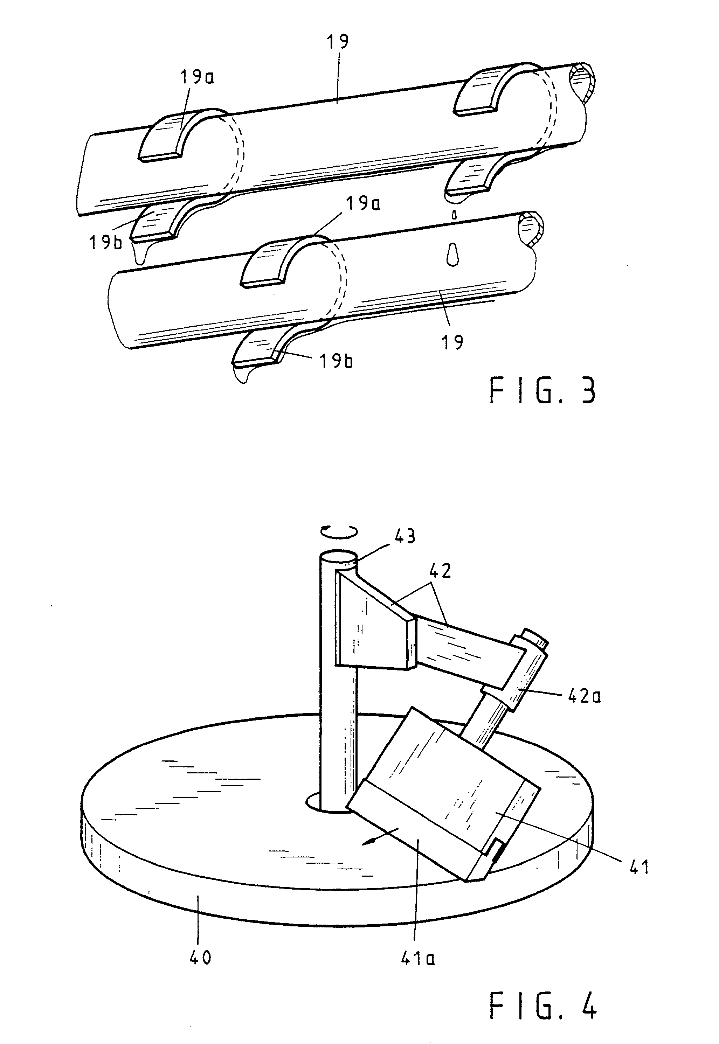

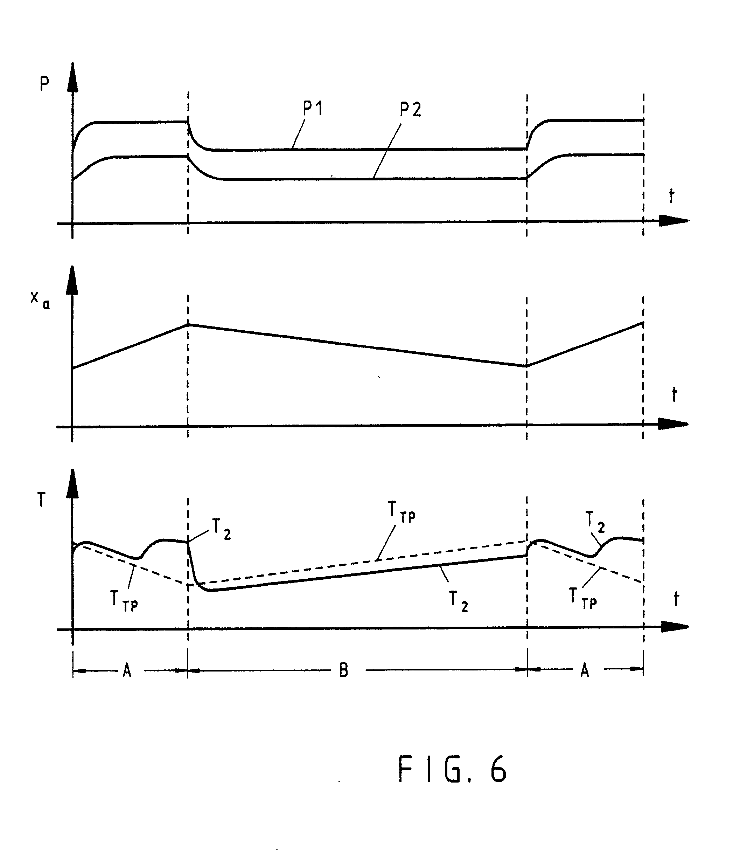

Im unteren Teil des Gegenstromwäschers 31 ist ein von einem Motor 44 angetriebener Schabwärmetauscher 40 - 44 angeordnet, wie er im Detail in Fig. 4 dargestellt ist.

Im folgenden wird die Betriebsweise des Eiserzeugers 1 im Zusammenhang mit dem Produktkreislauf erläutert.

Der bei der Gefrierverdampfung im Raum 2 entstehende Wasserdampf wird in den, aus Treibdüsen 8a, Düsenkammern 8, den Mischräumen 9 und 10 und den Diffusoren 11 bestehenden Dampfstrahlverdichtern komprimiert. Hierbei wirkt als Treibmittel Dampfgemisch aus der Leitung 7, das zunächst das aus dem Raum 26 über die Leitung 24 herangeführte Dampfgemisch durch Vermischung beschleunigt. Die so entstandenen Dampfstrahlen wirken danach als Treibstrahlen für den Niederdruckdampf aus dem Gefrierverdampfungsraum 2.

Das Dampfgemisch besteht aus Wasserdampf und einem Zusatzstoff, der in Wasser löslich ist und leichter als Wasser siedet. Ferner soll die wässrige Lösung dieses Zusatzstoffes beim Tripelpunkt einen Dampfdruck aufweisen, der niedriger als der Dampfdruck von reinem Wasser (6.1 mbar) ist. Im Ausführungsbeispiel soll Aethanol verwendet werden. Hierdurch wird eine Erniedrigung des Dampfdruckes des Gemisches am Tripelpunkt auf beispielsweise 5.9 mbar erzielt.

Im Raum 2 wird vorteilhaft bei einem möglichst hohen Dampfdruck von beispielsweise ca. 5.8 mbar an der Oberfläche der gefrierverdampfenden Eiskristallsuspension gearbeitet, was durch an späterer Stelle angegebene Massnahmen erreicht werden kann.

Da erfindungsgemäss ein relativ kleines Druckverhältnis von Raum 3 / Raum 2 von beispielsweise ca. 1.1 erreicht werden kann, und grosse Volumenströme im allgemeinen verarbeitet werden müssen, wirkt sich dieses günstig auf die Kompressionsleistung aus. Es können daher mit Vorteil Dampfstrahlverdichter eingesetzt werden, so dass der gesamte Eiserzeugerapparat als Einheit ohne mechanisch bewegte Teile ausgebildet werden kann. Es sei jedoch darauf hingewiesen, dass die Erfindung auch die Anwendung von Axial- oder Radialkompressoren umfassen soll.

Im als Kondensator-Verdampfer ausgebildeten Raum 3 des Eiserzeugers 1 wird das eintretende Dampfgemisch durch Wärmeaustausch mit verdampfendem Kältemittel teilweise auf den Rohren 19 kondensiert, welches durch Stutzen 20 den Rohrbündeln 19 zugeführt und durch die an die Sammler 22 angeschlossenen Leitungen 23 an die Saugseite einer nicht dargestellten Kältemaschine zurückgeführt wird.

Der in die hohle Trennwand 26 eintretende Wasserdampf ist an Aethanol angereichert und wird durch Leitung 24 den Dampfstrahlverdichtern zugeführt.

Bei der Erfindung wird die Dampfkondensation im Raum 3 derart durchgeführt, dass keine Vereisung der Kondensatorrohre 19 entsteht. Da Abtauvorgänge nicht erforderlich sind, lässt sich die Kältemaschine ohne kompliziertes Umschalten kontinuierlich betreiben; überdies fallen die mit dem Abtauen verbundenen Energieverluste weg.

Die treibende Kraft für den Transport des bei der Eisbildung im Raum 2 freiwerdenden Dampfes zu den Kondensatorrohren 19 wird teils durch Dampfverdichtung und teils durch Temperaturgefälle von Raum 2 zu Raum 3 erzeugt. Der Beitrag zur treibenden Kraft durch das Temperaturgefälle ist beschränkt, da sich auf den Kondensatorrohren 19 kein Eis ausbilden soll. Durch stärkere Zugabe von Zusatzstoff, wie Aethanol, kann dieser zweite Beitrag erhöht werden.

Solange die Kondensationstemperatur über der Tripelpunktstemperatur liegt, die vom Gehalt an Aethanol abhängt, besteht keine Vereisungsgefahr.

Der Kondensationsvorgang lässt sich aber auch unterhalb des Tripelpunktes, d.h. bei unterkühltem Kondensat, betreiben. Die Unterkühlung, ausgedrückt als Differenz zwischen der Tripelpunkttemperatur und der Kondensattemperatur, darf jedoch einen kritischen Wert, der beispielsweise 3 K beträgt, nicht überschreiten. Dieser kritische Wert hängt von der Oberflächenbeschaffenheit der Kondensatorrohre ab und hängt auch ab davon, wie stark die Kondensatorrohre unter Störeinflüssen vibrieren.

Im ersten Fall besteht für den Anschlussstutzen 25 und die Zuleitung mit dem Ventil 27, sowie den Separator 28 kein Bedarf, d.h. sie können wegfallen. Diese Komponenten werden nur im zweiten Fall benötigt.

Da das Verdichtungsverhältnis von Raum 3 / Raum 2 möglichst gering, z.B. auf 1.1, gehalten Werden soll, lässt sich die nötige treibende Kraft für den Dampftransport nur durch eine genügend starke Absenkung der Kondensationstemperatur erzeugen. Soll diese Temperatur nicht unter den Tripelpunkt fallen, so ist die Menge an Zusatzstoff vorgegeben.

Da man daran interessiert ist, den Bedarf an Zusatzstoff zu reduzieren, einerseits aus Kostengründen, hauptsächlich aber, da ein möglichst reines Endprodukt erzeugt werden soll, wird vorteilhaft die Kondensation des Dampfgemisches im unterkühlten Bereich durchgeführt.

In diesem Fall besteht im Raum 3 jedoch die Gefahr, dass das von den Kondensatorrohren 19 abtropfende Kondensat beim Aufschlagen auf die Wand des Bodenraumes 4 wegen seiner Unterkühlung zu Eisansatz führen könnte.

Aus diesem Grund wird durch den Stutzen 25 eine Eiskristallsuspension in den Bodenraum 4 eingeleitet. Beim Vermischen des unterkühlten Kondensats mit der Eiskristallsuspension wird die Unterkühlung abgebaut, wobei die hierzu nötige Wärme durch die wachsenden Eiskristalle geliefert wird.

Die dem Bodenraum 4 zugeführte Eiskristallsuspension wird getrennt von dem bei der Gefrierverdampfung im Raum 2 gebildeten Eis erzeugt. Dieses Eis wird mit primärem Eis bezeichnet, da es nicht durch Kristallwachstum aus schon bestehenden Eiskristallen gewonnen wird, sondern die Kristalle müssen neu gebildet werden.

Die Erzeugung von primärem Eis erfolgt vorteilhaft im Ausführungsbeispiel mit Hilfe eines an sich bekannten Schabwärmetauschers (vergl. beispielsweise die US-PS 2 299 414) im unteren Bereich des Gegenstromwäschers 31.

Der Schabwärmetauscher weist eine gekühlte Wärmetauscherplatte 40 auf, der durch einen Leitungsanschluss 45 Kältemittel zugeführt wird. Das im Wärmetauscher verdampfte Kältemittel wird durch einen Leitungsanschluss 46 an die Saugseite der Kältemaschine zurückgeführt. Die Wärmetauscherplatte 40 ist in die mittels Pumpe 34 aus dem Bodenraum 4 herangeführte Eissuspension eingetaucht. Der Wärmetauscher weist einen Schaber 41 auf, der durch sein Eigengewicht auf die Platte 40 gedrückt wird, eine Schaberklinge 41a, die z.B. aus abriebfestem Kunststoff besteht, einen Halter 42 des Schabers, eine Hülse 42a, in der der Schaberstiel gleitend geführt wird und eine Antriebswelle 43, die mit dem Antriebsmotor 44 verbunden ist (vergl. Fig. 2 und 4).

Die Eiserzeugung aus der wässrigen Lösung mit dem erniedrigten Gefrierpunkt führt zu Eisschuppen. Eine solche Schuppe ist ein feines Plättchen, dessen Dicke rund 0,1 mm beträgt und dessen Fläche in der Grössenordnung von 1 mm² ist. Die Bildung solcher Eisschuppen wird dadurch bewirkt, dass einerseits Eis wegen anisotropen Kristallwachstums in Form von Scheibchen kristallisiert, und dass andererseits das Dickenwachstum dieser Scheibchen infolge ansteigender Konzentrationen des gefrierpunkterniedrigenden Stoffes in den Zwischenräumen benachbart wachsender Eiskristalle sehr schnell zum Erliegen kommt.

Die mit dem Verfahren erzeugten Eisschuppen lassen sich mit relativ geringem Aufwand von der Wärmetauscherfläche abstreifen; aufgrund ihres, gegenüber der Lösung geringeren, spezifischen Gewichtes schwimmen sie selbsttätig aus dem Bereich der Wärmetauscherflächen nach oben.

Die Erzeugung des primären Eises wird auch dazu genutzt, eine Abtrennung von Aethanol vorzunehmen. Dank der Tatsache, dass Aethanol nicht in die Eiskristalle eingebaut wird, kann die Stofftrennung durch Waschen, im vorliegenden Beispiel mittels des Gegenstromwäschers 31, erfolgen.

Es ist auch möglich, die primäre Eissuspension nur zu einem kleinen Teil mit Hilfe eines Schabwärmetauschers zu erzeugen und den Hauptteil durch Gefrierverdampfung des Kondensates zu gewinnen. In diesem Fall kann man die entsprechende Kondensatmenge durch eine separate Leitung in den Raum 2 einspeisen und die entstandene Eissuspension durch eine separate Ableitung aus Raum 2 entnehmen. Bei dieser Gefrierverdampfung erfolgt eine teilweise Abtrennung von Aethanol, bevor das primäre Eis in den Gegenstromwäscher 31 eingeleitet wird.

Aus einem Teil des Kondensats wird im Dampferzeuger 30 das Aethanol abgetrennt. Das im Separator 28 austretende, äthanolhaltige Kondensat wird im Gegenstromwärmeaustauscher 32 erwärmt und zu einem Teil im Dampferzeuger 30, der beispielsweise als Fallfilmverdampfer ausgebildet und von komprimiertem Kältemitteldampf beheizt ist (s. Zu- und Ableitung 47 und 48) verdampft und bildet den an Aethanol reichen Treibdampf der Dampfstrahlverdichter.

Die Forderung nach Abtrennung des Aethanols aus dem Kondensat bestimmt die zu erzeugende Menge an primärem Eis. Das Kondensat, welches um den, dem Dampferzeuger 30 zugeführten Anteil reduziert ist, und das im Gegenstromwäscher 31 benötigte Waschwasser legen zusammen die Menge an primärem Eis fest.

Um die Unterkühlung des im Raum 3 erzeugten Kondensats minimal zu halten oder sogar ganz auszuschliessen, werden vorteilhaft auf den Rohren 19 des Kondensator-Verdampfers in Abständen Spangen 19a mit nach unten weisenden Zungen 19b aufgelötet, an welchen das unterkühlte Kondensat abfliessen kann (vergl. Fig. 3). Hierdurch kann die Filmdicke des Kondensats auf den Rohroberflächen gering gehalten werden und damit der Temperaturunterschied von der Rohroberfläche zur Filmoberfläche reduziert werden. Wichtig ist auch, dass die Kondensatorrohre 19 und die Spangen 19a so angeordnet sind, dass das abtropfende Kondensat nicht erneut in Kontakt mit einer Kondensatoroberfläche kommt.

Das am Boden des Dampferzeugers 30 austretende, an Aethanol verarmte Wasser wird nach Abkühlung im Gegenstromwärmeaustauscher 32 der am Kopfteil des Gegenstromwäschers 31 austretenden Suspension von primärem Eis zugemischt.

Im Raum 2 erfolgt die sekundäre Eiserzeugung, d.h. die Haupteiserzeugung durch Kristallwachstum bei Gefrierverdampfung am Tripelpunkt durch Vergrösserung einerseits der primären Eiskristalle und andererseits der rezirkulierten, sekundären Eiskristalle.

Das mittels Pumpe 35 rezirkulierte sekundäre Eis wird mit dem gewaschenen primären Eis vermischt und in den Kopfteil des Raumes 2 eingeleitet. Der Eisgehalt dieser Suspension beträgt beispielsweise 15 %.

Der Dampfdruck bei der Gefrierverdampfung ist um so grösser, je grösser die Teilchendichte der suspendierten Eiskristalle ist. Ein möglichst hoher Dampfdruck im Raum 2 wird, wie an vorstehender Stelle angegeben ist, angestrebt, um ein möglichst geringes Verdichtungsverhältnis von Raum 3 zu Raum 2 zu ermöglichen. Eine grosse Teilchendichte der Eiskristalle im Raum 2 wird dadurch erreicht, dass ständig primäre Eiskristalle in den Raum 2 eingeleitet werden.

Eine Teilmenge der im Raum 2 entstandenen Eiskristallsuspension mit einem Eisgehalt von beispielsweise 20 % wird dem Eiserzeuger 1 durch den Auslass 17 entnommen und mit dem durch Leitung 51 in die Anlage eingeleiteten Speisewasser vermischt.

Die dünnflüssige Suspension wird durch Leitung 52 mittels einer Pumpe 36 in die Entwässerungsvorrichtung 33 eingeleitet, die ein rohrförmiges Sieb 33a aufweist.

Während das abgetrennte Wasser einerseits als Waschwasser in dem Gegenstromwäscher 31 und andererseits als Transportwasser für das gewaschene primäre Eis dient, kann das Endprodukt, beispielsweise ein 50%iger Eiskristallbrei durch Leitung 53 seiner Verwendung bzw. einer weiteren Aufbereitung zugeführt werden.

Aethanolverluste werden an der Stelle 54 des Dampferzeugers 30 gedeckt.

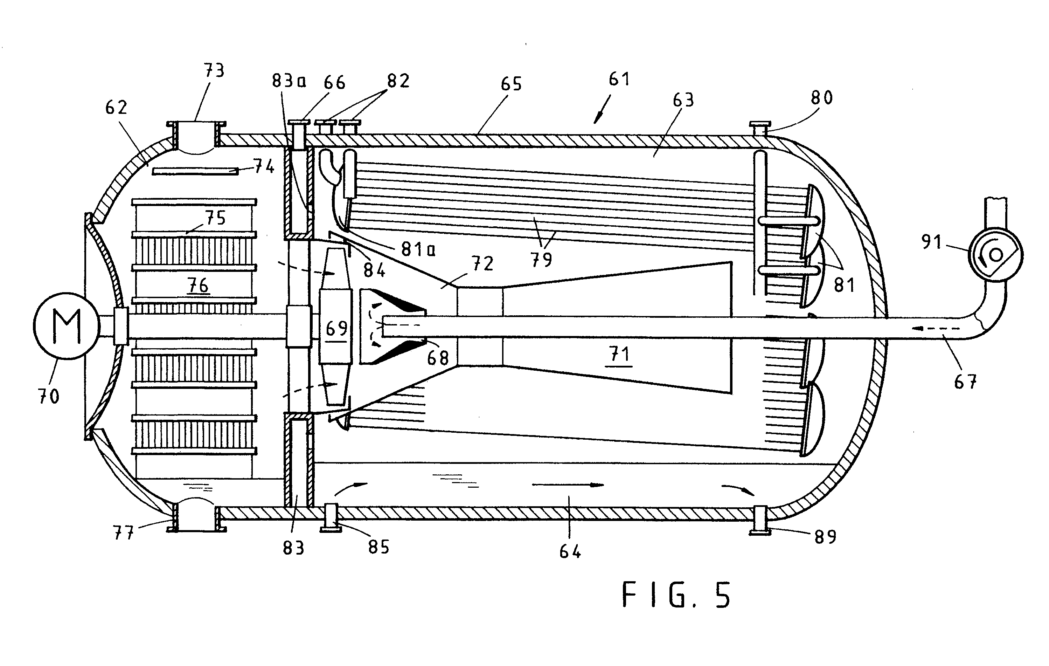

Der in Fig. 5 dargestellte Eiserzeuger 61 weist wie Fig. 1a ebenfalls einen Gefrierverdampfungsraum 62, einen Kondensationsraum 63 und einen Bodenraum 64 auf und ist von einem druckfesten Mantel 65 umschlossen. Der Anschluss an eine nicht dargestellte Vakuumpumpe erfolgt über eine Absaugleitung 66.

Im Eiserzeuger 61 ist ein, von einem Motor 70 angetriebener, einstufiger Axialverdichter angeordnet. In Serie zu dem Axialverdichterrad 69 ist ein Dampfstrahlverdichter mit einer Düse 68 und einem Mischraum 72 angeordnet. Die beiden Verdichter weisen einen gemeinsamen Diffusor 71 auf.

Im Raum 62 ist ein Verteiler 74 für rezirkulierte Eiskristallsuspension angeordnet. Für die Führung der Eiskristallsuspension sind Roste 75 unterhalb des Verteilers 74 angeordnet. Die während des Betriebes über die Roste 75 freifallende Eiskristallsuspension in Form von Schichten ist mit der Bezugsziffer 76 bezeichnet. An den unteren Teil des Raumes 62 ist ein Austrittsstutzen 77 für Eiskristallsuspension angeschlossen.

Im Raum 63 ist ein Rohre 79 aufweisender gefluteter Kondensator-Verdampfer angeordnet. Die Rohre 79 sind in Rohrbündeln mit Kältemittelverteilern 81 und Sammlern 81a zusammengefasst.

Das Kältemittel wird den einzelnen Kältemittelverteilern 81 während des Betriebes durch den Anschlussstutzen 80 zugeleitet. Das teilverdampfte Kältemittel wird aus den Sammlern 81a durch Leitungen 82 an die Saugseite der Kältemaschine zurückgeführt.

Die Räume 62 und 63 sind durch eine Trennwand 83 unterteilt. Die Trennwand ist hohl ausgebildet und mit Oeffnungen 83a versehen. Während des Betriebes werden die in den Apparat durch das Speisewasser eingebrachten Inertgase, insbesondere Luft, durch die Oeffnungen 83a, Hohlwand 83 und Leitung 66 mittels einer Vakuumpumpe abgesaugt.

Der Raum 63 steht mit dem Mischraum 72 durch einen düsenartigen Ringkanal 84 in Verbindung. Durch ihn wird der während des Betriebes sich im Raum 63 mit Zusatzstoff, z.B. Aethanol, anreichernde Dampf rezirkuliert.

In den Bodenraum 64 des Eiserzeugers 1 mündet ein Stutzen 85 für die Zuführung von primärer Eissuspension. An den Bodenraum 64 ist ein Austrittsstutzen 89 für die Ableitung von Eissuspension angeschlossen.

Mit dem Eiserzeuger steht analog zum ersten Ausführungsbeispiel ein Produkt- und ein Kältemittelkreislauf in Verbindung.

Während des Betriebes arbeitet die Anlage in der folgenden Weise:
Der bei der Gefrierverdampfung im Raum 62 entstehende Wasserdampf wird in dem aus Axialverdichterrad 69 und Diffusor 71 bestehenden Axialverdichter komprimiert. Ein zusätzlicher Beitrag zur Kompression des Dampfes wird in dem in Serie dazugeschalteten Dampfstrahlverdichter 68, 71 bewirkt. Hierbei wirkt als Treibmittel Dampf aus einem nicht dargestellten Dampferzeuger, welcher durch eine Leitung 67 in den Eiserzeuger 61 eingeleitet wird.

Dieser Dampf ist mit einem Zusatzstoff, z.B. Aethanol, angereichert. Im Mischraum 72 wird der Treibdampf mit dem Dampf aus Raum 62 und dem mit Zusatzstoff angereicherten, durch Ringkanal 84 zuströmenden Dampf gemischt.

Für die Druckverhältnisse in den Räumen 62, 63 und 64 gelten die zum ersten Ausführungsbeispiel (Fig. 1a bis 2) gemachten Ausführungen.

Im als Kondensator-Verdampfer ausgebildeten Raum 63 wird das die Rohre 79 umströmende Dampfgemisch durch Wärmeaustausch mit die Rohre 79 durchströmenden Kältemittel auf den Aussenwänden der Rohre 79 teilweise kondensiert.

Zur Vermeidung von Wiederholungen wird für die in den Räumen 63 und 64 stattfindenden physikalischen Vorgänge auf die entsprechenden Ausführungen im ersten Ausführungsbeispiel verwiesen.

Im vorliegenden Fall sei zunächst angenommen, dass der in Leitung 67 angeordnete Drehschieber 91 während des ganzen Betriebes geöffnet ist, d.h. er könnte bei dieser Betrachtungsweise ganz in Fortfall kommen.

Das im Raum 63 entstehende Dampfgemisch reichert sich auf dem Strömungsweg zu dem Ringkanal 84 mit Zusatzstoff an.

Das sich im Bodenraum 64 ansammelnde Kondensat wird durch Anschlussstutzen 89 einem nichtdargestellten Schabwärmetauscher analog zu dem Schabwärmetauscher 40 bis 44 der Fig. 2 zugeführt. Im Falle, dass der Kondensationsvorgang im unterkühlten Bereich erfolgen soll, wird aus dem Schabwärmetauscher ein Teil der primären Eissuspension durch Anschlussstutzen 85 in den Bodenraum 64 analog der Fig. 2 zurückgeführt. Wie schon im ersten Ausführungsbeispiel kann die äthanolreiche primäre Eiskristallsuspension von Zusatzstoff weitgehend teils durch Verdampfung und teils durch Waschen befreit werden. Dieses primäre Eis wird anschliessend der Gefrierverdampfung im Raum 62 zugeführt, wobei äthanolarmes sekundäres Eis entsteht.

Schliesslich sei noch der Fall diskutiert, indem Zusatzstoff nur intermittierend zugegeben wird. Hierzu wird der Drehschieber 91 nur periodisch geöffnet und damit der Dampfstrahlverdichter periodisch in Betrieb gesetzt.

In Fig. 6 sind in drei Diagrammen die Zustandsänderungen des Druckes, der Zusatzstoffmenge und der Temperatur im Raum 63 über die Zeit t während drei Phasen A, B, A schematisch dargestellt.

Hierbei ist $P_1$ der Druck des verdichteten Dampfes, $P_2$ der Dampfdruck an der Oberfläche des Kondensats, $X_a$ der Molenbruch des Zusatzstoffes im Kondensat, $T_2$ die Temperatur des Kondensats an der Oberfläche und $T_{TP}$ die Tripelpunkttemperatur.

Während der Phase A ist der Dampfstrahlverdichter ein- und während der Phase B ist er ausgeschaltet. Der Kondensationsvorgang findet während der Phase B im unterkühlten Bereich statt. Die Unterkühlung, die zunächst weit unterhalb des kritischen Wertes liegt, erhöht sich wegen zunehmender Verarmung an Zusatzstoff im Raum 63. Die Phase B endet, wenn die Unterkühlung den kritischen Wert erreicht hat und vereinzelt auf den Kondensatorrohren 79 spontan Eis sich zu bilden beginnt.

Während der nun folgenden Phase A ist der Dampfdruck im Raum 63 so hoch, dass das Ende Phase B entstandene Eis wieder abschmelzen kann. Zunächst ist die Kondensattemperatur $T_2$ im wesentlichen gleich der Tripelpunkttemperatur $T_{TP}$ und wächst schliesslich, nachdem das Eis geschmolzen ist, über $T_{TP}$ an. Mit dem Treibstrahl für den Dampfstrahlverdichter wird während der Phase A der Zusatzstoff in den Raum 63 eingespeist.

## Ansprüche

1. Verfahren zur Erzeugung einer Eiskristallsuspension mittels Gefrierverdampfung am Tripelpunkt, wobei der entstehende Dampf verdichtet und anschliessend kondensiert wird und die entstandene Eiskristallsuspension zu Produkt aufbereitet wird, dadurch **gekennzeichnet**, dass beim Verdichten des Dampfes diesem ein Stoff zugemischt wird, der in Wasser löslich ist und leichter als Wasser siedet, und welcher eine Erniedrigung des Dampfdruckes der wässrigen Lösung am Tripelpunkt bezüglich dem Tripelpunkt von reinem Wasser bewirkt, und dass das Gemisch durch indirekten Wärmeaustausch mit einem Kühlmittel gekühlt und kontinuierlich kondensiert wird, und dass in einem weiteren Verfahrensschritt durch Gefrieren aus dem Kondensat ein Gemisch von Eispartikeln und wässriger Lösung des zugemischten Stoffs gebildet wird, dass dann das Eis-Flüssigkeitsgemisch zumindest teilweise in Eis und wässrige Lösung getrennt wird, dass dann aus der wässrigen Lösung der zugemischte Stoff zumindest teilweise abgetrennt und dem Verfahren erneut zugeführt wird und dass schliesslich die abgetrennten Eispartikel zur weiteren Eiserzeugung der gefrierverdampfenden Eissuspension zugeführt werden.

2. Verfahren nach Anspruch 1, dadurch gekennzeichnet, dass der Stoff dem Dampf intermittierend zugemischt wird.

3. Verfahren nach Anspruch 1, dadurch gekennzeichnet, dass als zugemischter Stoff Aethanol verwendet wird.

4. Vorrichtung zur Durchführung eines Verfahrens nach Anspruch 1, mit einem Eiserzeuger (1; 61) mit einem ersten Raum (2; 62), in welchem eine Eiskristallsuspension durch Gefrierverdampfung erzeugt wird, einen zweiten Kühlraum (3; 63), in welchem Wärmetauscher (19; 79) zur Kondensation des bei der Gefrierverdampfung entstehenden Dampfes angeordnet sind, und mit einem zwischen den beiden Räumen (2,3; 62,63) angeordneten Verdichter (8-12; 69,71), dadurch gekennzeichnet, dass zwischen den beiden Räumen (2,3; 62,63) eine Zuspeiseleitung (6, 24; 67) für den dem Dampf zuzumischenden Stoff angeordnet ist, so dass im zweiten Raum (3; 63) eine Kondensation des aus Wasserdampf und dem zugemischten Stoff bestehenden Gemisches erfolgt, dass mit dem zweiten Raum (3; 63) ein dritter Raum (4; 64) verbunden ist, in welchem das Kondensat gesammelt wird, dass in Serie zu diesem Raum (4; 64) eine Einrichtung (40 bis 44) zur Erzeugung eines Gemischs von Eispartikeln und wässriger Lösung des zugemischten Stoffs aus dem Kondensat angeordnet ist und dass ferner anschliessend an diese Einrichtung (40 bis 44) Hilfsvorrichtungen (31, 30) vorgesehen sind zur Trennung der Eispartikel von der wässrigen Lösung sowie zur Trennung des zugemischten Stoffes von der wässrigen Lösung und zur Zuführung der abgetrennten Eispartikel zum ersten Raum (2; 62).

5. Vorrichtung nach Anspruch 4, dadurch gekennzeichnet, dass zur Verdichtung des Dampfes mehrere Verdichter parallel angeordnet sind.

6. Vorrichtung nach Anspruch 4, dadurch gekennzeichnet, dass der Eiserzeuger (1; 61) als bauliche Einheit ausgeführt ist, wobei die ersten beiden Räume (2,3; 62,63) horizontal nebeneinander und der dritte Raum (4; 64) unterhalb des zweiten Raumes (3; 63) angeordnet ist.

7. Vorrichtung nach Anspruch 4, dadurch gekennzeichnet, dass der Verdichter als Dampfstrahlverdichter (8 bis 12) ausgebildet ist.

8. Vorrichtung nach Anspruch 4, dadurch gekennzeichnet, dass der Verdichter als Axialverdichter (69,71) ausgebildet ist.

9. Vorrichtung nach Anspruch 8, dadurch gekennzeichnet, dass zusätzlich noch ein Dampfstrahlverdichter (68,71) angeordnet ist.

10. Vorrichtung nach Anspruch 4, dadurch gekennzeichnet, dass die Einrichtung zur Erzeugung eines Gemisches aus Eispartikeln und wässriger Lösung aus dem Kondensat als Schabwärmetauscher (40 bis 44) ausgebildet ist.

11. Vorrichtung nach Anspruch 7 oder 9 und nach Anspruch 10, dadurch gekennzeichnet, dass eine Zufuhrleitung für Eiskristallsuspension vom Schabwärmetauscher (40 bis 44) zum Einlass (25; 85) des dritten Raumes (4; 64) des Eiserzeugers (1; 61) führt, dass ein Separator (28) angeordnet ist, der mit dem Auslass (29; 89) des dritten Raumes (4; 64) verbunden ist und der zur Abtrennung von Kondensat aus der Eiskristallsuspension dient, dass weiterhin ein Dampferzeuger (30) angeordnet ist, welcher wasserseitig mit dem Separator (28) und dampfseitig über die Zuleitung (7; 67) mit dem Verdichter (8 bis 12; 68 bis 72) verbunden ist, dass ferner ein Gegenstromwäscher (31) angeordnet ist, der an den Ausgang für die Eiskristallsuspension des Separators (28) angeschlossen ist, und dass schliesslich der obere Teil des Gegenstromwäschers (31) über eine Förderleitung für Eiskristallsuspension mit dem oberen Teil des ersten Raumes (2) verbunden ist.

12. Vorrichtung nach Anspruch 11, dadurch gekennzeichnet, dass der Schabwärmetauscher (40 bis 44) im unteren Bereich des Gegenstromwäschers (31) angeordnet ist.

13. Vorrichtung nach Anspruch 11 oder 12, dadurch gekennzeichnet, dass an den unteren Teil des ersten Raumes (2) eine Ableitung für Eiskristallsuspension angeschlossen ist, in welche die Zuführleitung (51) für Speisewasser mündet, und dass die Ableitung (52) des aus Speisewasser und Eiskristallsuspension bestehenden Gemisches an eine Entwässerungs-Einheit (33) angeschlossen ist, welche eine Ableitung (53) für eingedicktes Produkt aufweist, und die wasserseitig mit dem Gegenstromwäscher (31) verbunden ist.

14. Vorrichtung nach Anspruch 11 oder 12, dadurch gekennzeichnet, dass an den unteren Teil des ersten Raumes (2) des Eiserzeugers (1) eine Ableitung angeschlossen ist für Rückführung einer Teilmenge der Eiskristallsuspension in den oberen Teil des ersten Raumes (2).

15. Vorrichtung nach Anspruch 11 oder 12, dadurch gekennzeichnet, dass in der Zuleitung (67) ein steuerbares Abschlussorgan (91) angeordnet ist.

## Claims

1. A process for producing an ice crystal suspension by means of freeze evaporation at the triple point, the vapour which arises being compressed, then condensed, and the ice crystal suspension which is yielded being processed into a product, characterised in that during compression of the vapour there is added thereto a substance which is soluble in water, boils more readily than water and reduces the vapour pressure of the aqueous solution at the triple point as compared with the triple point of pure water, and the mixture is cooled by indirect heat exchange with a coolant and continuously condensed, and in a further step a mixture of ice particles and aqueous solution of the admixed substance is formed by freezing from the condensate, whereafter the ice slurry is separated at least to some extent into ice and aqueous solution, whereafter the admixed substance is separated at least to some extent from the aqueous solution and returned to the process, and finally the separated ice particles are supplied to the freeze-evaporating ice suspension for further ice production.

2. A process according to claim 1, characterised in that the substance is admixed to the vapour intermittently.

3. A process according to claim 1, characterised in that ethanol is used as admixed substance.

4. An apparatus for performing a process according to claim 1 comprising: an ice producer (1; 61) having a first chamber (2; 62) in which an ice crystal suspension is produced by freeze evaporation; a second cooling chamber (3; 63) in which heat exchangers (19: 79) for condensing the vapour evolved in freeze evaporation are disposed; and a compressor (8 - 12; 69, 71) between the two chambers (2, 3; 62, 63), characterised in that a feed line (6, 24; 67) for the substance to be admixed to the vapour is disposed between the two chambers (2, 3; 62, 63) so that the mixture consisting or water vapour and admixed substance condenses in the second chamber (3, 63), a third chamber (4, 64) is connected to the second chamber (3; 63) and the condensate is collected in the third chamber (4; 64), means (40 - 44) for producing a mixture of ice particles and aqueous solution of the admixed substance from the condensate are disposed in series with the third chamber (4; 64), and the means (40 to 44) are followed by aids (31, 30) for separating the ice particles from the aqueous solution and for separating the admixed substance from the aqueous solution and for supplying the separated ice particles to the first chamber (2; 62).

5. An apparatus according to claim 4, characterised in that a number of compressors are disposed in parallel to compress the vapour.

6. An apparatus according to claim 4, characterised in that the ice maker (1; 61) is a constructional unit, the first two chambers (2, 3; 62, 63) being disposed horizontally one beside another while the third chamber (4; 64) is disposed below the second chamber (3; 63).

7. An apparatus according to claim 4, characterised in that the compressor is a vapour jet compressor (8 to 12).

8. An apparatus according to claim 4, characterised in that the compressor is an axial flow compressor (69, 71).

9. An apparatus according to claim 8, characterised in that a further vapour jet compressor (68, 71) is provided.

10. An apparatus according to claim 4, characterised in that the means for producing a mixture of ice particles and aqueous solution from the condensate take the form of a Schab heat exchanger (40 to 44).

11. An apparatus according to claim 7 or 9 and according to claim 10, characterised in that a feed line for ice crystal suspension extends from the Schab heat exchanger (40 to 44) to the entry (25; 85) of the third chamber (4; 64) of the ice maker (1; 61), a separator (28) is connected to the exit (29; 89) of the third chamber (4; 64) and is effective to separate condensate from the ice crystal suspension, a vapour generator (30) is provided whose water side is connected to the separator (28) and whose vapour side is connected by way of the feed line (7; 67) to the compressor (8 to 12. 68 to 72), a countercurrent washer (31) is connected to the output for the ice crystal suspension of the separator (28), and the top part of the washer (31) is connected by way of an ice crystal suspension delivery line to the top part of the first chamber (2).

12. An apparatus according to claim 11, characterised in that the Schab heat exchanger (40 to 44) is disposed in the lower part of the washer (31).

13. An apparatus according to claim 11 or 12, characterised in that an ice crystal suspension discharge line is connected to the bottom part of the first chamber (2) and the feed water feed line (51) extends to such discharge line, and the discharge line (52) of the mixture consisting of feed water and ice crystal suspension is connected to a dewatering unit (33) which has a discharge line (53) for concentrated product and which is connected on its water side to the washer (31).

14. An apparatus according to claim 11 or 12, characterised in that a discharge line for refluxing some of the ice crystal suspension to the top part of the first chamber (2) of the ice producer (1) is connected to the bottom part of the first chamber (2).

15. An apparatus according to claim 11 or 12, characterised in that a controllable closure element (91) is disposed in the feed line (67).

## Revendications

1. Procédé pour produire une suspension de cristaux de glace par évaporation - congélation au point triple, la vapeur produite étant comprimée puis condensée et la suspension de cristaux de glace formée étant transformée en produit, caractérisé en ce que lors de la compression de la vapeur, on ajoute à celle-ci une substance qui est soluble dans l'eau et qui bout plus bas que l'eau et qui entraîne un abaissement de la tension de vapeur de la solution aqueuse au point triple par rapport au point triple de l'eau pure, et en ce que le mélange est refroidi par échange indirect de chaleur avec un réfrigérant et condensé en permanence, et en ce que dans une autre étape du procédé on forme, par congélation du condensat, un mélange de particules de glace et de solution aqueuse de la substance ajoutée, en ce qu'on sépare ensuite le mélange glace-liquide, au moins partiellement, en glace et solution aqueuse, en ce qu'on sépare ensuite de la solution aqueuse, au moins en partie, la substance ajoutée et en ce qu'on la réintroduit dans le procédé et en ce qu'enfin on envoie les particules de glace séparées à la suspension de glace a traiter par évaporation-congélation, pour produire encore de la glace.

2. Procédé selon la revendication 1, caractérisé en ce que la substance est ajoutée à la vapeur par intermittence.

3. Procédé selon la revendication 1, caractérisé en ce qu'on utilise de l'éthanol comme substance ajoutée.

4. Dispositif pour la mise en oeuvre d'un procédé selon la revendication 1, comportant un générateur de glace (1 ; 61) qui comporte un premier compartiment (2 ; 62) dans lequel est produite une suspension de cristaux de glace par évaporation-congélation, un deuxième compartiment de refroidissement (3 ; 63) dans lequel sont placés des échangeurs de chaleur (19 ; 79) destinés à condenser la vapeur produite lors de l'évaporation - congélation et un compresseur (8-12 ; 69, 71) placé entre les deux compartiments (2, 3 ; 62, 63), caractérisé en ce qu'on dispose entre les deux compartiments (2, 3 ; 62, 63) un conduit d'alimentation (6, 24 ; 67) pour la substance à mélanger à la vapeur, de manière qu'il se produise dans le deuxième compartiment (3 ; 63) une condensation du mélange constitué de la vapeur d'eau et de la substance ajoutée, en ce qu'un troisième compartiment (4 ; 64), dans lequel est collecté le condensat, est relié au deuxième compartiment (3 ; 63), en ce qu'un dispositif (40 à 44), destiné à produire un mélange de particules de glace et de solution aqueuse de la substance ajoutée à partir du condensat, est monté en série avec le compartiment (4 ; 64), et en ce qu'à la suite de ce dispositif (40 à 44), on prévoit des dispositifs auxiliaires (31, 30) pour séparer les particules de glace de la solution aqueuse ainsi que pour séparer la substance ajoutée de la solution aqueuse et pour envoyer les particules de glace séparées au premier compartiment (2 ; 62).

5. Dispositif selon la revendication 4, caractérisé en ce que plusieurs compresseurs en parallèle sont disposés pour comprimer la vapeur.

6. Dispositif selon la revendication 4, caractérisé en ce que le générateur de glace (1 ; 61) est une unité de construction, les deux premiers compartiments (2, 3 ; 62, 63) étant juxtaposés horizontalement et le troisième compartiment (4 ; 64) étant placé au-dessous du deuxième compartiment (3 ; 63).

7. Dispositif selon la revendication 4, caractérisé en ce que le compresseur est un compresseur à jet de vapeur (8 à 12).

8. Dispositif selon la revendication 4, caractérisé en ce que le compresseur est un compresseur axial (69, 71).

9. Dispositif selon la revendication 8, caractérisé en ce qu'on prévoit en outre un compresseur à jet de vapeur (68, 71).

10. Dispositif selon la revendication 4, caractérisé en ce que le dispositif destiné à produire un mélange de particules de glace et de solution aqueuse à partir du condensat, est un échangeur de chaleur à raclage (40 à 44).

11. Dispositif selon la revendication 7 ou 9 et selon la revendication 10, caractérisé en ce qu'un conduit d'alimentation pour la suspension de cristaux de glace mène de l'échangeur à raclage (40 à 44) à l'entrée (25 ; 85) du troisième compartiment (4 ; 64) du générateur de glace (1 ; 61), en ce qu'on prévoit un séparateur (28) qui est relié à la sortie (29; 89) du troisième compartiment (4 ; 64) et qui sert à séparer le condensat de la suspension de cristaux de glace, en ce qu'on prévoit en outre un générateur de vapeur (30) qui est relié côté eau au séparateur (28) et, côté vapeur, au compresseur (8 à 12 ; 68 à 72) par le conduit d'arrivée (7 ; 67), en ce qu'on prévoit en outre un laveur à contre-courant (31) qui est raccordé à la sortie de la suspension de cristaux de glace du séparateur (28), et en ce qu'enfin la partie supérieure du laveur à contre-courant (31) est reliée, par un conduit de transport de la suspension de cristaux de glace, à la partie supérieure du premier compartiment (2).

12. Dispositif selon la revendication 11, caractérisé en ce que l'échangeur de chaleur à raclage (40 à 44) est placé dans la région inférieure du laveur à contre-courant (31).

13. Dispositif selon la revendication 11 ou 12, caractérisé en ce qu'à la partie inférieure du premier compartiment (2) est raccordé un conduit d'évacuation de la suspension de cristaux de glace dans lequel débouche le conduit d'alimentation (51) de l'eau d'alimentation et en ce que le conduit d'évacuation (52) du mélange constitué de l'eau d'alimentation et de la suspension de cristaux de glace est raccordé à une unité de déshydratation (33) qui comporte un conduit d'évacuation (53) pour le produit épaissi et qui, côté eau, est relié au laveur à contre-courant (31).

14. Dispositif selon la revendication 11 ou 12, caractérisé en ce qu'à la partie inférieure du premier compartiment (2) du générateur de glace (1) est raccordé un conduit d'évacuation pour le recyclage d'une partie de la suspension de cristaux de glace dans la partie supérieure du premier compartiment (2).

15. Dispositif selon la revendication 11 ou 12, caractérisé en ce qu'un organe de fermeture (91) pouvant être manoeuvré est placé dans le conduit d'arrivée (67).

FIG. 1b

FIG. 1a

FIG. 2

FIG. 3

FIG. 4

P

P1  P2

t

$X_a$

t

T

$T_2$

$T_{TP}$

$T_{TP}$

$T_{TP}$

$T_2$

$T_2$

$T_{TP}$

t

A  B  A

F I G. 6

FIG. 5

EP 0 259 640 B1